(19) Europäisches Patentamt
European Patent Office
Office européen des brevets

(11) Numéro de publication: **0 167 463**
**A1**

(12) # DEMANDE DE BREVET EUROPEEN

(21) Numéro de dépôt: 85420104.3

(22) Date de dépôt: 30.05.85

(51) Int. Cl.[4]: **B 01 J 23/56**
B 01 J 23/64, B 01 D 53/36

(30) Priorité: 30.05.84 FR 8409160

(43) Date de publication de la demande: 08.01.86 Bulletin 86/2

(84) Etats contractants désignés: AT BE CH DE FR GB IT LI LU NL SE

(71) Demandeur: SOCIETE LYONNAISE DES APPLICATIONS CATALYTIQUES
105-121, avenue du 8 mai 1945
F-69140 Rillieux-La-Pape(FR)

(72) Inventeur: Daval, René
Le Fort Janot Saint Maurice de Gourdans
F-01800 Meximieux(FR)

(74) Mandataire: Maureau, Philippe et al,
Cabinet Germain & Maureau Le Britannia - Tour C 20, bld Eugène Déruelle Boîte Postale 3011
F-69392 Lyon Cédex 03(FR)

(54) **Nouvelle composition catalytique pour la combustion d'hydrocarbures et plus particulièrement du méthane.**

(57) Cette composition comprend au moins un élément noble de la famille du platine et de l'oxyde d'ytterbium $Yb_2O_3$.

Application à la combustion de méthane dans des installations de production d'énergie calorifique.

EP 0 167 463 A1

Croydon Printing Company Ltd.

"NOUVELLE COMPOSITION CATALYTIQUE POUR LA COMBUSTION D'HYDROCARBURES ET PLUS PARTICULIEREMENT DU METHANE"

La présente invention a pour objet une nouvelle composition catalytique pour la combustion d'hydrocarbures et plus particulièrement du méthane.

La combustion catalytique du méthane s'effectue selon des conditions plus contraignantes que celles normalement requises pour la combustion des gaz de pétrole liquéfiés tels le propane et butane.

Pour que la combustion catalytique du méthane soit complète, la température doit être plus élevée d'au moins 100°C de celle normalement admise pour la combustion du propane et butane. Ceci est essentiellement dû au fait que la molécule de méthane se trouve par son carbone unique sous une forme chimiquement plus stable que les molécules à longues chaînes ramifiées ou non telles celles du butane ou propane.

D'autre part, le pouvoir calorifique volumique du méthane est trois fois moins élevé que celui du butane par exemple, ce qui réduit d'autant,à puissance calorifique égale,le temps de contact combustible/catalyseur. Egalement du fait du volume important du combustible lorsqu'il s'agit du méthane par comparaison avec le propane ou butane la pénétration à contre-courant de l'air comburant au coeur de la masse catalytique se trouve limitée (processus de transfert de masse).

Les techniques actuellement développées pour la création de masses de contact en combustion catalytique du méthane, reposent essentiellement sur l'activité catalytique du platine élaboré sous forme de mousse. Cet élément noble est parfois mis en association avec divers oxydes et plus particulièrement les oxydes de chrome et cérium, $Cr_2 O_3$, et $Ce O_2$. L'introduction d'oxydes catalytiquement actifs permet de réduire substantiellement la masse de l'élément noble ou des éléments nobles mis en oeuvre.

Les oxydes catalyseurs, théoriquement plus stables du point de vue structure cristalline que les métaux finement divisés, sont sensés doter la masse de contact d'une activité catalytique plus durable. Cette plus grande stabilité dûe essentiellement à l'état polycristallin des substances actives, a été mise en évidence de façon incontestable pour les compositions catalytiques destinées à la combustion des hydrocarbures à longues chaînes tels le propane et butane.

Cependant, pour ce qui concerne la combustion catalytique du méthane, et pour les raisons évoquées et notamment la température de la masse de contact, on observe une perte d'activité brutale qui se manifeste dès les premières dizaines d'heures qui suivent la mise en fonction du catalyseur. Les rendements chutent brutalement et ne dépassent guère en fin de compte 0,85 à 0,90 après quelques centaines d'heures. Cette perte d'activité est évidemment la conséquence, du fait qu'elle apparaît dès les premières heures de mise en service de la masse de contact, d'une rapide transformation cristalline de la composition catalytique.

Les éléments nobles situés dans le groupe VIII de la classification périodique des éléments, et notamment le platine, sont les éléments essentiels de toutes compositions catalytiques capables de conduire à son terme ultime et dans les conditions pratiques les plus avantageuses, une réaction d'oxydation des hydrocarbures.

Cependant, comme cela a été démontré, l'état cristallin de ces éléments nobles, lorsqu'ils sont sous une forme très divisée, subit des transformations profondes dûes essentiellement aux conditions de réaction d'oxydation du méthane.

En conséquence, il a été constaté que les rendements obtenus en combustion catalytique du méthane sont toujours très inférieurs à ceux obtenus avec des hydrocarbures tels le propane et le butane.

La figure 1 du dessin schématique annexé montre, en traits pointillés, une courbe d'activité catalytique obtenue à la suite d'épreuves d'endurance pratiquées sur un catalyseur conventionnel. Il ressort très clairement de cette

courbe une perte d'activité brutale survenant durant les premières dizaines d'heures de mise en service de la masse de contact.

La présente invention vise à remédier à ces inconvénients.

A cet effet, la composition catalytique qu'elle concerne comprend au moins un élément noble de la famille du platine et de l'oxyde d'ytterbium $Yb_2O_3$.

Il a été constaté que l'oxyde d'ytterbium mis en association avec le platine ou un élément de la famille du platine, permettait d'obtenir un catalyseur d'oxydation du méthane particulièrement actif et thermiquement plus stable que ceux connus, tout en présentant un grand intérêt d'un point de vue économique en permettant de réduire la masse des éléments nobles mis en oeuvre.

Un certain nombre de tests mettant en oeuvre, respectivement, un catalyseur à base de platine, un catalyseur à base de platine additionné d'oxyde de chrome $Cr_2O_3$ et un catalyseur à base de platine additionné d'oxyde d'ytterbium, ont permis de mettre en évidence les propriétés de cette dernière composition.

Pour effectuer ces tests comparatifs, les substances ont été placées dans un appareil étanche, fonctionnant en circuit fermé et comportant essentiellement :

- une cellule à réaction dans laquelle est déposée la substance active à tester ;
- une pompe de circulation ;
- différents appareils de mesure et de contrôle des températures, pression, etc...

Le mélange combustible confectionné pour les tests était composé de 7 % de méthane en volume de pureté 99,99 % et d'air atmosphérique, purifié de sa vapeur d'eau et des traces de gaz tels que $CO_2$ en particulier, chaque composition a été testée selon un mode opératoire rigoureusement respecté. Les différents paramètres obtenus tels que :

- température d'amorçage de la réaction ;
- température maximale atteinte durant la réaction ;

- rendement de réaction obtenu

ont été utilisés comme données comparatives. Après chaque test effectué sur chacune des compositions catalytiques, ces dernières ont été soumise à une épreuve thermique comportant une exposition de 90 heures à 700°C en atmosphère oxydante. Les tests de combustion ont été ensuite reconduits selon le même mode opératoire.

- Composition des catalyseurs testés :

N° 1 - Platine : 1 partie en poids.
Oxyde de thorium $ThO_2$ : 1 partie en poids (Promoteur).

N° 2 - Platine : 1 partie en poids. )
Oxyde de thorium : 1 partie en poids. ) Catalyseur Conventionne
Oxyde de chrome : $Cr_2O_3$ : 3,75 parties en poids)

N° 3 - Platine : 1 partie en poids.
Oxyde d'ytterbium $Yb_2O_3$ : 3,75 parties en poids.

Le tableau suivant résume les résultats obtenus :

| CATALYSEUR | ETAT | TEMPERATURE D'AMORCAGE DE LA REACTION | TEMPERATURE MAXIMALE ATTEINTE DURANT LA REACTION | RENDEMENT |
|---|---|---|---|---|
| N° 1 | Naissant | 514°C | 655°C | 72 % |
| | Traité thermiquement | 618°C | 658°C | 52 % |
| N° 2 | Naissant | 485°C | 591°C | 65 % |
| | Traité thermiquement | à 600°C peu d'activité catalytique | - | - |
| N° 3 | Naissant | 508°C | 674°C | 73,5 % |
| | Traité thermiquement | 579°C | 701°C | 65 % |

Il est à noter que ces tests sont destinés à fournir des données uniquement comparatives entre des compositions catalytiques de référence dont les propriétés et performances réelles sont bien connues, et des compositions catalytiques à l'étude.

Les rendements obtenus sont obligatoirement inférieurs à ce qu'ils sont dans les conditions réelles d'exploitation des

brûleurs à catalyse. Les tests sont rigoureux car la réaction a lieu en vase clos. Durant la réaction, l'air de combustion ne se renouvelle pas, le taux d'oxygène s'appauvrit graduellement ; la réaction finit par s'arrêter d'elle-même. Les compositions catalytiques les plus actives sont celles bien entendu qui prolongent la réaction jusqu'à réduire en un temps donné et constant le taux d'oxygène de l'air à un niveau le plus bas. Cette méthode permet de tester les catalyseurs à partir de quantités infinitésimales et de l'ordre du milligramme.

Enseignements pouvant être tirés de ces tests :

- la composition N° 1 qui nécessite pour la confection d'un brûleur une masse de Pt élevée, subit une transformation thermique assez conséquente.
- la composition N° 2 qui est un type de catalyseur conventionnel, possède, bien que la température d'amorçage de la réaction soit la plus basse, l'activité catalytique la plus faible, et ne résiste pas à l'épreuve thermique.
- la composition N° 3 a un rendement supérieur à la composition N° 1 et résiste mieux à l'épreuve thermique.

Ces résultats mettent en évidence le double rôle joué par l'oxyde d'ytterbium :

- activité catalytique certaine lorsqu'il est associé à un élément noble tel le platine ;
- activité inhibitrice, limitant les phénomènes de recristallisation ou frittage de l'élément noble.

Une autre composition catalytique de base peut être élaborée en introduisant un oxyde d'élément à forte densité électronique de façon à renforcer l'état de division des composés actifs durant la phase finale d'obtention du catalyseur. Pour ce faire, l'oxyde d'uranium 238, $UO_2$ a été sélectionné, des essais comparatifs conduits selon la technique décrite ont montré qu'effectivement ce composé contribuait de façon sensible à améliorer l'activité catalytique de la substance active.

la composition testée a été réalisée comme indiquée.

Composition N° 4 :

- Platine : 1 partie en poids.
- Oxyde d'ytterbium $Yb_2\ O_3$ : 3,75 parties en poids.
- Oxyde d'uranium $UO_2$ : 0,5 partie en poids.

- Le tableau suivant résume les résultats obtenus :

| CATALYSEUR | ETAT | TEMPERATURE D'AMORCAGE DE LA REACTION | TEMPERATURE MAXIMALE ATTEINTE DURANT LA REACTION | RENDEMENT |
|---|---|---|---|---|
| N° 4 | NAISSANT | 499°C | 712°C | 86 % |
| | Traité thermiquement | 582°C | 634°C | 55 % |

Le rendement comparatif obtenu à partir du catalyseur naissant est remarquable, ce qui traduit un état cristallin du catalyseur très favorable lorsque ce dernier est à l'état naissant, cependant cet état paraît peu stable à haute température.

Une cinquième composition a été réalisée en introduisant dans la composition N° 4 un troisième oxyde. Ce composé dont l'élément est également de la famille des lanthanides est l'oxyde de cérium $Ce\ O_2$, connu pour ses propriétés catalytiques.

Cette cinquième composition comprend :

- Platine : 1 partie en poids
- Oxyde d'ytterbium $Yb_2\ O_3$ : 3,75 parties en poids
- Oxyde d'uranium $UO_2$ : 0,5 partie en poids
- Oxyde de cérium $Ce\ O_2$ : 0,5 partie en poids.

Le tableau suivant résume les résultats obtenus :

| CATALYSEUR | ETAT | TEMPERATURE D'AMORCAGE DE LA REACTION | TEMPERATURE MAXIMALE ATTEINTE EN COURS DE REACTION | RENDEMENT |
|---|---|---|---|---|
| N° 5 | Naissant | 508°C | 610°C | 79 % |
| | Traité thermiquement | 605°C | 699°C | 70 % |

Les compositions de base objet de l'invention peuvent

être constituées comme suit :

- Pt + $Yb_2 O_3$
  où le platine entre pour une partie en poids et l'oxyde d'ytterbium pour 1 à 4 partie.
- Pt + $Yb_2 O_3$ + $UO_2$
  où le platine entre pour une partie en poids, l'oxyde d'ytterbium pour 1,5 à 3,75 parties et l'oxyde d'uranium pour 0,5 à 1 partie.

D'autres expérimentations ont été menées à l'aide des compositions de base N° 3 et 4 en associant à ces dernières divers oxydes doués d'une activité catalytique plus ou moins affirmée. Les résultats obtenus ont montré qu'il était possible, à partir de ces deux compositions de base faisant appel plus particulièrement, à l'oxyde d'ytterbium $Yb_2 O_3$, de créer une pluralité de compositions catalytiquement actives et dont les éléments et oxydes constitutifs sont en proportions variables, dépendantes des buts recherchés tant au point de vue activité catalytique que du point de vue économique.

Les compositions les plus remarquables sont les suivantes :

- Pt + $Yb_2 O_3$ + $Cr_2 O_3$
  où le platine entre pour une partie en poids, l'oxyde d'ytterbium pour 0,94 à 2,8 parties et l'oxyde de chrome pour 0,94 à 2,8 partie.
- Pt + $Yb_2 O_3$ + $Ce O_2$ + $Cr_2 O_3$
  où le platine entre pour une partie en poids, l'oxyde d'ytterbium pour 1 à 2 parties, l'oxyde de cérium pour 0,5 à 1,25 partie, et l'oxyde de chrome pour 0,5 à 1,25 partie.
- Pt + $Yb_2 O_3$ + $Ce O_2$
  où le platine entre pour 1 partie en poids, l'oxyde d'ytterbium pour 1,87 à 2,8 parties, et l'oxyde de cérium pour 0,94 à 1,87 partie.
- Pt + $Yb_2 O_3$ + $Zn O$
  où le platine entre pour 1 partie en poids, l'oxyde d'ytterbium pour 1,5 à 3,75 parties et l'oxyde de zinc pour 0,5 à 2 parties.

- $Pt + Yb_2O_3 + UO_2 + CeO_2$
où le platine entre pour 1 partie en poids, l'oxyde d'ytterbium pour 1,5 à 3,75 parties, l'oxyde d'uranium pour 0,5 à 1 partie, l'oxyde de cérium pour 0,5 à 2 parties.

Les éléments nobles de la famille du platine peuvent être substitués à ce dernier, ces éléments étant de préférence le rhodium, l'irridium et plus particulièrement le palladium.

La masse de ce dernier élément devra être de deux à trois fois supérieure à celle du platine initialement prévue.

Il est entendu que les compositions catalytiques décrites ne sont pas limitatives, mais qu'au contraire, un grand nombre d'arrangements est possible, par déplacement d'une formule à l'autre des éléments et oxydes qui sont cités, ou par mise en association aux compositions de base

$Pt + Yb_2O_3$

$Pt + Yb_2O_3 + UO_2$

d'éléments ou oxydes quelconques qui ne sont pas cités.

Les meilleures performances peuvent être obtenues à l'aide de ces compositions catalytiques par le choix d'un support particulièrement bien adapté. Ce support doit permettre, compte-tenu de ses caractéristiques physiques d'aboutir à une très grande et très homogène dispersion des compositions catalytiquement actives.

Le support doit posséder une bonne stabilité thermique et chimique, tout risque de formation à la température de travail de la masse catalytique d'amalgames entre les différents composants du support et du catalyseur doit être écarté. Le support doit de préférence être constitué par des fibres arrangées en matelas dont la tenue mécanique est assurée par l'enchevêtrement des fibres renforcé ou non selon le cas par un liant inorganique. L'ensemble doit posséder une grande perméabilité au gaz.

Si le support est constitué par un quelconque agglomérat rigide et formé de particules liées entre elles, il doit nécessairement posséder les caractéristiques physiques

requises en catalyse hétérogène des gaz et plus particulièrement en oxydation du méthane à partir de brûleurs n'ayant pas recours à l'air primaire.

Ces caractéristiques sont notamment une faible densité apparente et une grande perméabilité au gaz de façon à favoriser au maximum le processus de transfert de masse entre carburant et comburant.

Les autres caractéristiques essentielles d'un support particulièrement bien adapté peuvent se résumer ainsi :

- Matériau composé de substances minérales physiquement et chimiquement inertes dans les conditions développées par la réaction. Substances telles que : $SiO_2$, $Al_2O_3$, $ZrO_2$, MgO, etc ... seules ou combinées naturellement ou synthétiquement.
- Grosseur des fibres ou particules initiales inférieure ou égale à 5 microns.
- Structure cristalline stable à 700°C.
- Densité apparente inférieure à 0,10.
- Retrait thermique nul à 700°C.
- Surface spécifique supérieure à 80 $m^2/g$ avec une perte à 700°C inférieure à 15 %.
- Volume des pores supérieur à 0,15 $cm^3/g$ de substance.
- Le diamètre d'ouverture des pores doit être tel que tout risque de non pénétration des réactants ou au contraire tout risque de voir apparaître des phénomènes de rétention des composés gazeux soit écarté.

Les nouvelles compositions catalytiques objet de l'invention sont de préférence déposées sur le support à l'aide d'une solution constituée des sels dissous contenant les éléments concernés, le solvant doit présenter une inertie chimique totale face à ces sels. Les éléments et oxydes recherchés peuvent être obtenus par différentes voies telles que :

- Traitement thermique lorsque les sels sont thermiquement décomposables. Les éléments nobles étant dans ce cas libérés sous forme de mousse et les éléments secondaires transformés en oxydes correspondants. Le traitement thermique

a lieu en milieu oxydant.

- Réduction totale ou partielle des sels par un réducteur tel l'hydrogène puis transformation des éléments secondaires en oxydes et activation des éléments nobles par un traitement thermique en milieu oxydant.
- Une troisième méthode consiste à transformer les éléments secondaires en hydroxydes correspondants, puis à imprégner ces hydroxydes d'une solution des sels des métaux nobles réductibles par la chaleur. La transformation finale des éléments nobles en mousse et des éléments secondaires en oxydes est obtenue par traitement thermique en milieu oxydant.

Bien entendu ces méthodes ne sont pas limitatives, on choisira ou on déterminera une méthode en fonction du support et de certains impératifs.

Ces différentes méthodes permettent d'obtenir les compositions catalytiques objet de l'invention sous une forme syncristallisée extrêmement divisée et réparties de façon homogène sur l'ensemble du support. Un maximum d'échange et de surface de contact est donné aux réactants. Lorsque le support est fibreux, les meilleurs rendements sont obtenus en combustion du méthane pour une vitesse spatiale comprise entre 100 et 200.

Un exemple non limitatif de préparation de diverses compositions catalytiques suivie des résultats obtenus est ici donné.

Les sels des différents constituants, tous réductibles par la chaleur (nitrates et chlorures) sont dissous dans l'eau distillée ; la solution primaire est diluée par l'alcool éthylique de façon à obtenir une solution finale titrant 70° alcoolique. Le titre en sels de la solution est rendu compatible avec le pouvoir de retenue le plus faible en liquide de support, et la masse souhaitée de catalyseur déposé.

Le support est imprégné à saturation par la solution du catalyseur, l'excès de solution est extrait par un moyen mécanique du genre centrifugation. La vitesse de la

centrifugeuse est réglée de façon à obtenir le plus petit volume possible de liquide retenu. Le support ainsi imprégné est séché à une température ne dépassant pas 60°C. Le support dépourvu de toute trace de solvant est traité à l'étuve en milieu oxydant et selon un diagramme de températures bien défini.

Le diagramme ci-dessous indiqué peut être retenu :

| TEMPERATURES | TEMPS D'EXPOSITION |
|---|---|
| 20 à 100°C | 1 à 2 mn |
| 100 à 200°C | 1 à 2 mn |
| 200 à 300°C | 1 à 3 mn |
| 300 à 400°C | 1 à 2 mn |
| 400 à 480°C | 2 à 4 mn |
| 480 à 540°C | 4 à 6 mn |

Les masses catalytiques ainsi élaborées sont prêtes à équiper un brûleur à catalyse de confection conventionnelle et comportant essentiellement :

- une arrivée de gaz ;
- un corps de chauffe en tôle protégée ;
- un serpentin de distribution du gaz ;
- une tôle perforée support du matelas de diffusion ;
- un matelas de diffusion du gaz en fibres minérales ;
- un système de fermeture ou de verrouillage du corps de chauffe ;
- un grillage de maintien.

Cinq compositions catalytiques conformes à celles qui ont été citées, ont été déposées sur support, comme indiqué, et testées dans les conditions suivantes :

- chaque brûleur catalytique, a été, après 15 heures de fonctionnement sur méthane, placé dans un caisson étanche de 17,5 $m^3$ et alimenté à nouveau par du méthane à la pression de 2000 Pa.

La combustion a été prolongée jusqu'à réduire le taux

d'oxygène du milieu ambiant de 21 à 19 %. Le gaz carbonique, l'oxyde de carbone et le méthane libre ont été mesurés à l'aide d'analyseurs par absorption dans l'infrarouge dont les sensibilités de détection sont les suivantes :

$CO_2$ : 100 ppm
CO : 2 ppm
$CH_4$ : 5 ppm

Compositions catalytiques testées :

N° 1 : Pt + $Yb_2 O_3$
N° 2 : Pt + $Yb_2 O_3$ + $Cr_2 O_3$
N° 3 : Pt + $Yb_2 O_3$ + $Cr_2 O_3$ + $Ce O_2$
N° 4 : Pt + $Yb_2 O_3$ + $UO_2$
N° 5 : Pt + $Yb_2 O_3$ + $UO_2$ + $Ce O_2$

Les proportions de chaque composant des compositions énumérées, sont comprises dans les limites qui ont été indiquées.

Performances catalytiques obtenues en fin d'essai.

| COMPOSITION | PUISSANCE en W/cm2 | $CH_4$ non oxydé en % | CO libre en ppm | Rendement % $CH_4$ oxydé / $CH_4$ Total |
|---|---|---|---|---|
| N° 1 | 1,40 | 2,3 | 0 | 97,7 |
| | 1,80 | 1,20 | 5 | 98,8 |
| | 2,20 | 1,80 | 17 | 98,2 |
| N° 2 | 1,40 | 4,60 | 0 | 95,4 |
| | 1,80 | 2,50 | 6 | 97,5 |
| | 2,20 | 2,80 | 10 | 97,2 |
| N° 3 | 1,40 | 3,50 | 0 | 96,5 |
| | 1,80 | 2,50 | 5 | 97,5 |
| | 2,20 | 3,0 | 8 | 97 |
| N° 4 | 1,40. | 2,50 | 0 | 97,8 |
| | 2,20 | 2,20 | 16 | 97,5 |
| N° 5 | 1,40 | 2,80 | 0 | 97,2 |
| | 2,20 | 2,70 | 12 | 97,3 |

Des épreuves d'endurance sur méthane à une puissance de 2,20 W/$cm^2$ ont été pratiquées sur les compositions N° 1, 3 et 5.

Les résultats obtenus en fin d'épreuve ont été déterminés selon la même méthode et le même mode opératoire.

| COMPOSITION | TEMPS D'EPREUVE EN HEURE | PUISSANCE W/$cm^2$ | $CH_4$ non oxydé en % | CO LIBRE en ppm | RENDEMENT $CH_4$ oxydé / $CH_4$ Total |
|---|---|---|---|---|---|
| N° 1 | 14 | 1,4 | 3,1 | 0 | 96,9 |
| | | 2,2 | 2,5 | 5 | 97,5 |
| | 100 | 1,4 | 3,0 | 0 | 97 |
| | | 2,2 | 3,85 | 13 | 96,15 |
| | 3000 | 1,4 | 4 | 0 | 96 |
| | | 2,2 | 4 | 0 | 96 |
| N° 3 | 14 | 1,4 | 3,85 | 0 | 96,15 |
| | | 2,2 | 3,50 | 10 | 96,5 |
| | 100 | 1,4 | 3 | 0 | 97 |
| | | 2,2 | 4,5 | 8 | 95,5 |
| | 3000 | 1,4 | 4 | 0 | 96 |
| | | 2,2 | 5,3 | 10 | 94,7 |
| N° 5 | 14 | 1,4 | 2,25 | 0 | 97,75 |
| | | 2,2 | 2,75 | 7 | 97,25 |
| | 300 | 1,4 | 2,5 | 0 | 97,5 |
| | | 2,2 | 2,7 | 5 | 97,3 |
| | 2000 | 1,4 | 2,6 | 0 | 97,4 |
| | | 2,2 | 2,4 | 5 | 97,6 |

Il ressort des tableaux ci-dessus que les compositions intéressantes permettent d'obtenir, pour une puissance de 2,2 W/$cm^2$ des rendements élevés et performants dans le temps. Ceci est illustré par la courbe représentée en trait plein à la figure 1.

Ces nouvelles compositions catalytiques offrent également de larges possibilités en ce qui concerne les puissances développées par unité de surface. La figure 2 du

dessin schématique annexé illustre bien ce fait, et montre le progrès très sensible apporté par les compositions catalytiques selon l'invention correspondant à une courbe en trait plein, par rapport aux compositions traditionnelles dont le rendement est représenté par une courbe en traits pointillés.

Comme il ressort de ce qui précède, l'invention apporte une grande amélioration à la technique existante en fournissant une nouvelle composition catalytique plus particulièrement destinée à la combustion des hydrocarbures, et notamment du méthane, en vue de l'équipement de brûleurs, d'installations de chauffage ou de destruction d'effluents gazeux. Cette composition catalytique présente l'avantage d'être économique, de posséder un rendement qui ne diminue que très peu dans le temps, et d'obtenir, pour une puissance de chauffage déterminée, des rendements plus élevés qu'habituellement.

Comme il va de soi, l'invention ne se limite pas aux seules compositions catalytiques décrites ci-dessus à titre d'exemples ; elle en embrasse, au contraire, toutes les variantes.

- REVENDICATIONS -

1. - Composition catalytique pour la combustion d'hydrocarbures du type comprenant au moins un élément noble de la famille du platine, caractérisée en ce qu'elle contient en outre de l'oxyde d'ytterbium $Yb_2 O_3$.

2. - Composition catalytique selon la revendication 1, caractérisée en ce qu'elle comprend du platine et de l'oxyde d'ytterbium $Yb_2 O_3$, où le platine entre pour une partie en poids et l'oxyde d'ytterbium pour 1 à 4 parties.

3. - Composition catalytique selon la revendication 1, caractérisée en ce qu'elle comprend du platine, de l'oxyde d'ytterbium $Yb_2 O_3$ et de l'oxyde d'uranium $UO_2$, où le platine entre pour une partie en poids, l'oxyde d'ytterbium pour 1,5 à 3,75 parties et l'oxyde d'uranium pour 0,5 à 1 partie.

4. - Composition catalytique selon la revendication 2, caractérisée en ce qu'elle comprend du platine, de l'oxyde d'ytterbium $Yb_2 O_3$ et de l'oxyde de chrome $Cr_2 O_3$, où le platine entre pour une partie en poids, l'oxyde d'ytterbium pour 0,94 à 2,8 parties et l'oxyde de chrome pour 0,94 à 2,8 parties.

5. - Composition catalytique selon la revendication 2, caractérisée en ce qu'elle comprend du platine, de l'oxyde d'ytterbium $Yb_2 O_3$, de l'oxyde de cérium $Ce O_2$ et de l'oxyde de chrome $Cr_2 O_3$, où le platine entre pour une partie en poids, l'oxyde d'ytterbium pour 1 à 2 parties, l'oxyde de cérium pour 0,5 à 1,25 partie et l'oxyde de chrome pour 0,5 à 1,25 partie.

6. - Composition catalytique selon la revendication 2, caractérisée en ce qu'elle comprend du platine, de l'oxyde d'ytterbium $Yb_2 O_3$ et de l'oxyde de zinc ZnO, où le platine entre pour 1 partie en poids, l'oxyde d'ytterbium pour 1,5 à 3,75 parties et l'oxyde de zinc pour 0,5 à 2 parties.

7. - Composition catalytique selon la revendication 3, caractérisée en ce qu'elle comprend du platine, de l'oxyde d'ytterbium $Yb_2 O_3$, de l'oxyde d'uranium $UO_2$ et de

l'oxyde de cérium $CeO_2$, où le platine entre pour 1 partie en poids, l'oxyde d'ytterbium pour 1,5 à 3,75 parties, l'oxyde d'uranium pour 0,5 à 1 partie, et l'oxyde de cérium pour 0,5 à 2 parties.

8. - Composition catalytique selon l'une quelconque des revendications 1 à 7, caractérisée en ce que dans le cas où elle comprend un élément noble de la famille du platine, autre que le platine, tel que rhodium, irridium ou palladium, la masse mise en oeuvre de cet élément est deux à trois fois supérieure à celle de platine.

FIG_1

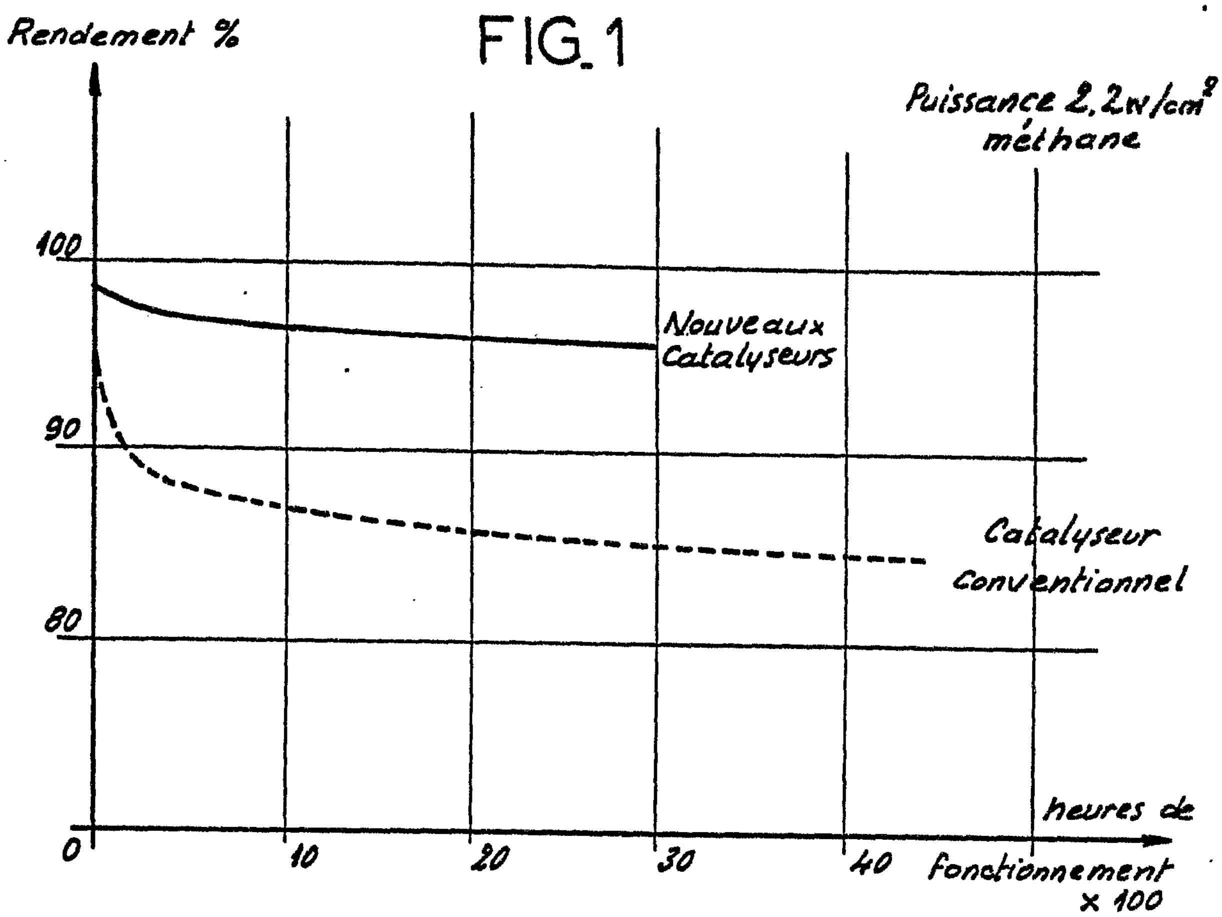
Rendement %
Puissance 2,2 W/cm²
méthane
100
90
80
0
Nouveaux
Catalyseurs
Catalyseur
conventionnel
10
20
30
40
heures de
fonctionnement
x 100

FIG_2

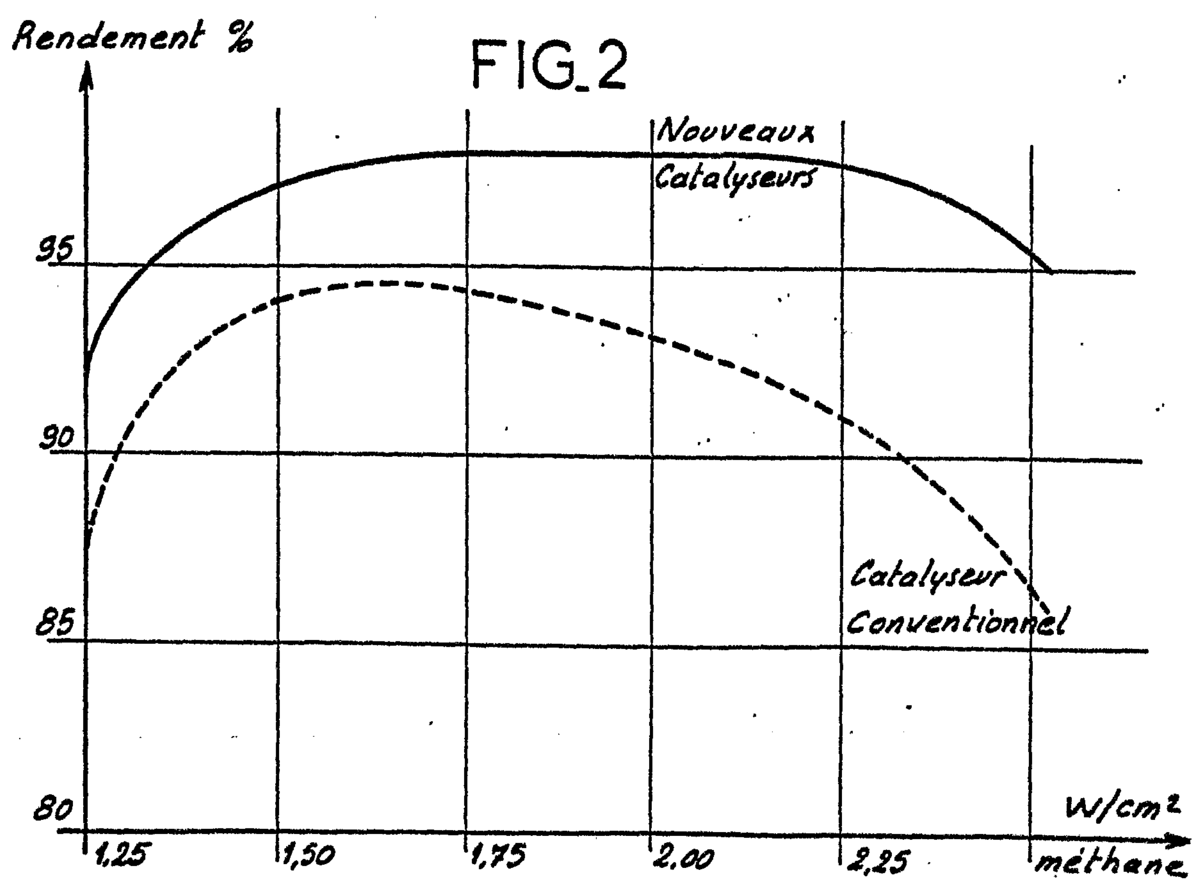
Rendement %
Nouveaux
Catalyseurs
95
90
85
80
Catalyseur
Conventionnel
W/cm²
1,25
1,50
1,75
2.00
2,25
méthane

Office européen des brevets

**0167463**

# RAPPORT DE RECHERCHE EUROPEENNE

Numero de la demande

EP 85 42 0104

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | US-A-4 056 489 (S.G. HINDIN et al.) * Colonne 10, lignes 64-68; colonne 11, lignes 1-13; colonne 17, lignes 23-25; colonne 18, lignes 1-23 * | 1 | B 01 J 23/56<br>B 01 J 23/64<br>B 01 D 53/36 |
| Y | FR-A-2 161 302 (SOC. FRANCAISE DES PRODUITS POUR CATALYSE) * Page 10, lignes 15-17; page 4, taleau I, 0 * | 1 | |
| A | EP-A-0 101 645 (THE BRITISH PETROLEUM Co.) * Page 12, ligne 40 * | 1 | |
| A | EP-A-0 085 398 (HOECHST A.G.) * Page 11, exemple 16 * | 1 | DOMAINES TECHNIQUES RECHERCHES (Int. Cl.4) |
| A | FR-A-2 369 872 (THE BRITISH PETROLEUM CO.) * Page 12, exemple 16 * | 1 | B 01 J<br>B 01 D |
| A | FR-A-2 187 887 (INST. FRANCAIS DU PETROLE) * Page 1, lignes 1-7 et 31-33; page 2, lignes 1-8 * | 1,2,4,5,6 | |
| | --- -/- | | |

Le présent rapport de recherche a été établi pour toutes les revendications

| Lieu de la recherche | Date d'achèvement de la recherche | Examinateur |
|---|---|---|
| LA HAYE | 29-08-1985 | KERRES P.M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen des brevets

**RAPPORT DE RECHERCHE EUROPEENNE**

0167463
Numero de la demande

EP 85 42 0104



## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl 4) |
|---|---|---|---|
| A | US-A-4 210 561 (G.J. ANTOS)<br>* Colonne 3, lignes 46-65; clonne 7, lignes 14-38 *<br>----- | 1,3,7,8 | |
| | | | DOMAINES TECHNIQUES RECHERCHES (Int. Cl.4) |
| | | | |

Le présent rapport de recherche a été établi pour toutes les revendications

| Lieu de la recherche | Date d'achèvement de la recherche | Examinateur |
|---|---|---|
| LA HAYE | 29-08-1985 | KERRES P.M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82